# EUROPÄISCHE PATENTSCHRIFT

(11) **EP 2 127 936 B1**
(45) Veröffentlichungstag und Bekanntmachung des Hinweises auf die Patenterteilung: **08.01.2020**
(21) Anmeldenummer: 09006514.5
(22) Anmeldetag: 14.05.2009
(51) Int. Cl.: B60L 15/20, B60L 15/38, B61L 3/00, B61L 15/00, B61L 25/02, B60L 15/40

(54) **Verfahren zur Beeinflussung und Begrenzung längsdynamischer Kräfte in einem Zugverband**
Method for influencing and limiting longitudinally dynamic forces in a train set
Procédé destiné à influencer et à limiter des forces dynamiques longitudinales dans une chaîne de wagons

(30) Priorität: 26.05.2008 DE 102008025060
(43) Veröffentlichungstag der Anmeldung: 02.12.2009
(73) Patentinhaber: Deutsche Bahn AG, 10785 Berlin (DE)
(72) Erfinder: Witthuhn, Martin, 85777 Fahrenzhausen / OT Viehbach (DE); Pohl, Steffen, 81245 München (DE)

(56) Entgegenhaltungen:
- EP-B1- 1 064 181
- DE-A1- 19 841 246
- US-A- 4 582 280
- US-A- 5 383 717
- US-A1- 2007 241 610

## Beschreibung

Die Erfindung betrifft ein Verfahren zur Beeinflussung und Begrenzung längsdynamischer Kräfte in einem Zugverband mit verteilt im Zugverband angeordneten, zur Einleitung von Antriebs- und Bremskräften in den Zugverband eingerichteten Lokomotiven, wobei die Lokomotiven über eine Hauptluftleitung des Zugverbandes sowie über eine Kommunikationsverbindung miteinander verbunden sind.

Züge werden über eine pneumatische Bremse gebremst. Ein von der Lokomotive gegebener Bremsbefehl - mittels indirekter Bremse - wird durch die Entlüftung der Hauptluftleitung (HL) eingeleitet. Der Druckabfall in der HL breitet sich im Zug aus. Erreicht der Druckabfall die Wagen, wird der Druck in den Bremszylindern innerhalb von einer festgelegten Zeitspanne auf den Zielwert angehoben. Diese Zeitspanne (Bremsentwicklungszeit) ist in internationalen Regelwerken festgelegt (UIC).. Dieses Bremssystem ist für die Regelzuglänge (ca. 700 m) über Jahrzehnte praxistauglich und sicher.

Will man längere oder schwerere Züge fahren, benötigt man in Abhängigkeit der Streckenführung (Steigungen) (z. B. weil die Traktionsleistung eines Triebfahrzeuges nicht ausreicht und wegen der Mindestbruchfestigkeit der Schraubenkupplung, des Zughakens und der Zugstange) weitere Triebfahrzeuge, die man im Zugverband verteilt.

Anhang A der DIN EN 50239 Bbl. 1 (Stand Mai 2008) beschreibt typische Beispiele der Mehrfachtraktionsanwendung bestehend aus führendem Triebfahrzeug (FTZ) und geführtem(n) Triebfahrzeug(en) (GTZ).

Das oben beschriebene Ansprechverhalten der pneumatischen Bremse und auch die (über Funkfernsteuerung) eingeleitete Bremsung des GTZ kann dazu führen, dass erhöhte Längsdruckkräfte entstehen. Diese erhöhten Längsdruckkräfte können entstehen, wenn die im Zug gespeicherte kinetische Energie (=1/2 m x v²) bewirkt, dass noch nicht oder erst schwächer bremsende Wagen auf bereits bremsende Wagen auflaufen. Dieser Effekt wird dadurch vergrößert, wenn der über Funk an das GTZ übertragene Bremsbefehl wegen Kommunikationsunterbrechungen von den GTZ nicht empfangen wird und das GTZ weiter mit aufgeschalteter Traktionsleistung gegen die vor ihm bereits bremsenden Wagen schiebt.

Kommen ungünstige betriebliche Bedingungen zusammen (z. B. schwere ungebremste Wagen schieben auf leichte bremsende Wagen) und geschieht das in einem Gleisbogen, kann es dazu kommen, dass die leichten Wagen "herausgedrückt" werden und entgleisen. Im Zusammenhang mit der Laufsicherheit von Güterwagen werden deshalb die ertragbaren Längsdruckkräfte nach UIC Merkblatt 530-2 in einem definierten Gleisbogen ermittelt.

Bekannt ist ein auf Funkverbindungen basierendes Zugsteuersystem, welches für eine Leiteinheit und mehrere entfernte Einheiten vorgesehen ist (US 4 582 280, US 4 553 723). Das System enthält ein Protokoll zur Einrichtung einer Funkverbindung zwischen Leiteinheit und den einen oder mehreren Einheiten, wobei dieses verhindert, dass eine der Einheiten in dem System Mitteilungen oder Befehle von anderen Einheiten in anderen Zugeinheiten oder Mitteilungen oder Befehle verarbeitet, die zwar von Einheiten in dem Zugsystem stammen, aber für andere Einheiten bestimmt sind. Zur Vermeidung eines gleichzeitigen Sendens von mehreren Einheiten des Systems auf einem gemeinsamen Übertragungskanal ist eine Übertragungskanalhierarchie vorgesehen. Im Rahmen dieser Hierarchie stellt das System sicher, dass Nachrichten höchster Priorität als erste übertragen werden. Das Steuersystem schafft eine koordinierte Kontrolle der Luftbremsfunktion im Zug.

Es kann in bestimmten Anwendungsfällen auch erwünscht sein, wenigstens vorübergehend einen Zugverband aus mehreren Zugsegmenten zu betreiben, wobei jedes Segment wenigstens eine Lokomotive und mehrere Wagen enthält. Derartige Zugsegmente können dann an einem Knotenpunkt miteinander verbunden und zusammen betrieben oder getrennt werden. Ein typischer Zug verlangt eine durchgehende Bremsleitung, die alle Lokomotiven und Wagen längs des Zuges verbindet. Bei einem segmentierten Zug würde die Bremsleitung typischerweise zwischen dem letzten Waggon eines vorangegangenen Segments und der nächsten Lokomotive des folgenden Zugsegmentes verbunden sein. Das Verbinden und Trennen der Bremsschläuche führt zu einem beachtlichen Arbeitsaufwand.

Die US 5 383 717 beschreibt den Einsatz einer Hilfslokomotive, die dazu verwendet wird, dem Zug beim Befahren einer Steigung vorübergehend zu unterstützen. Die Hilfslokomotive ist dabei mit einer Zugkopfeinheit (HOT-Einheit) ausgerüstet und der Waggon unmittelbar vor der Hilfslokomotive ist mit einer Zugende-Einheit (EOT-Einheit) ausgerüstet. Die Leitlokomotive ist ebenfalls mit einer HOT-Einheit ausgestattet. Die Bremsleitung der Hilfslokomotive ist vom restlichen Zug getrennt, sodass sich die Hilfslokomotive schneller an den Zugverband anschließen oder davon lösen kann. Die EOT-Einheit kommuniziert mit der HOT-Einheit der Hilfslokomotive und mit der HOT-Einheit der Führungslokomotive, sodass es der Hilfslokomotive ermöglicht wird, ihre Bremsen auf der Grundlage eines Spiegelbildes des Leitbremsdruckes zu betreiben, der von der EOT-Einheit gesehen wird.
Leider kann auch hier die Funkverbindung zwischen der EOT-Einheit und der HOT-Einheit der Führungslokomotive unterbrochen werden, wenn der Zug durch eine Kurve oder einen Tunnel fährt. Andere Umstände können ebenfalls einen weniger wirksamen Betrieb der Bremsen zwischen dem Zug und der Hilfslokomotive verursachen. Außerdem besteht keine Koordination zwischen der Antriebskraft der Lokomotiven Zugs und der Hilfslokomotive, sodass schädliche Kräfte zwischen Teilen des Zuges erzeugt werden können.

Bekannt ist ein Regelsystem für segmentierte Bremsleitungen in Zügen, die wenigstens ein erstes und ein zweites Zugsegment mit einer Bremsleitung enthalten (EP 1 064 181 B1). Das Zugregelsystem enthält vorteilhafterweise ein erstes Regelteilsystem zur Installation in einer Lokomotive des ersten Zugsegmentes und ein zweites Regelteilsystem zur Installation in einer Lokomotive des zweiten Zugsegmentes, wobei beide Systeme zur Steuerung der Zugbremsung und/oder der Antriebskraft miteinander kommunizieren. Das System enthält zusätzlich ein drittes Regelteilsystem zur Installation in einem dem Zugende des ersten Zugsegmentes benachbarten Waggon, welches mindestens einen Druckwandler zur Erfassung des Bremsleitungsdruckes und mindestens ein Regelventil zum Regeln des Bremsleitungsdruckes enthält. Alle Regelteilsysteme kommunizieren miteinander.

Ferner sind Systeme bekannt, bei denen der in einem Streckenatlas verzeichnete bzw. der über GPS ermittelte Streckenverlauf aktiv in die Geschwindigkeitsregelung eines Zuges einbezogen wird (DE 198 41 246 A1, DE 199 12 640 A1, DE 198 17 783 A1).

Allen bekannten Systemen mit einer Bremsenauslegung nach UIC in Zugverbänden mit Wagen mit Seitenpuffern ist gemeinsam:
- eine geschwindigkeits- und Gleisradien berücksichtigende Steuerung eines Zugverbandes mit mehreren Lokomotiven bzgl. der Antriebs- und Bremskräfte unter Beachtung zulässiger längsdynamischer Kräfte ist nicht möglich
- bei einer Unterbrechung der Kommunikation zwischen den einzelnen Einheiten des Zugverbandes ist besonders bei Zügen über 700m Zuglänge bislang kein uneingeschränkt sicherer Zugbetrieb möglich, sodass eine Abbremsung des Zugverbandes u. U. bis zum Stillstand desselben erfolgen muss.

Der Erfindung liegt die Aufgabe zugrunde, die Einhaltung zulässiger Längskräfte im Zugverband auch im Falle von Kommunikationsunterbrechungen zwischen den Lokomotiven in schweren und/oder langen Zügen zu gewährleisten, so dass kein unzulässiges Entgleisungsrisiko entstehen kann.

Dies wird erfindungsgemäß nach Maßgabe der Patentansprüche 1 bis 11 erreicht.

Auf geraden Streckenabschnitten kann ein Zugverband höhere Längsdruckkräfte ertragen ohne zu entgleisen, als in Bereichen mit engen Radien. Weiter kann ein Zugverband aufgrund der bei höheren Geschwindigkeiten niedrigeren Reibwerte der üblichen Bremseinrichtungen (Klotzbremsen) ebenfalls höhere Längsdruckkräfte ertragen ohne zu entgleisen.

Hierzu werden die Strecken, auf denen mit verteilter Mehrfachtraktion verkehrt werden sollen, in Streckenabschnitte unterteilt, die wiederum in Klassen eingeteilt werden. Die Klassen geben vor, wie sich der Zugverband in diesem Abschnitt bei einer Funkunterbrechung verhalten muss.

Dabei werden mindestens zwei Klassen vorgegeben:
- Klasse 0: In diesen Streckenabschnitten ist im Falle einer Funkunterbrechung innerhalb eines Zeitraumes von 0 bis 3 Sekunden, 3-5 Sekunden oder 18-30 Sekunden durch alle Lokomotiven im Zugverband eine Bremsung auszulösen.
- Klasse X: In diesen Steckenabschnitten ist im Falle einer Funkunterbrechung keine autonome Reaktion der Lokomotiven erforderlich. Eine Überwachung der Hauptluftleitung zum Erkennen von Bremsanforderungen für das Abschalten der Traktionsleistung von geführten Lokomotiven ist ausreichend.

Weitere Klassen können für das Verhalten von Gruppen von Zügen definiert werden, die unter vergleichbaren Umständen (wie z. B. einer Bremsanforderung) ein vergleichbares längsdynamisches Verhalten aufweisen. Hierbei werden diesen Gruppen von Zügen charakteristische Zeitfenster zugeordnet, innerhalb derer eine autonome Reaktion auf Funkunterbrechungen erfolgen muss. Die zulässigen Zeitfenster werden dabei unter anderem in Abhängigkeit von den Bremsentwicklungszeiten nach UIC 540 festgelegt, die für die Bremsstellung P 3 - 5 Sekunden und für die Bremsstellung G 18 bis 30 Sekunden betragen.

Die Klassifizierung der Streckenabschnitte wird in einer Datenbank gespeichert und steht allen Lokomotiven, die in Zügen mit verteilter Traktion fahren, zur Verfügung. Während der Fahrt wird die aktuelle Geschwindigkeit und die aktuelle Position ermittelt von jeder Lok ermittelt. Die Geschwindigkeit wird über Radsatzgeber oder Radareinrichtungen ermittelt, die aktuelle Position aus einer Kombination eines GPS-Empfängers und zur Überbrückung von Empfangslücken über einen Wegmesser bestimmt. Die Ortsinformation wird auf jeder Lok mit der Datenbank mit der Klassifizierung der Streckenabschnitte abgeglichen und somit die aktuell gültige Klasse ermittelt. Dabei wird auf die Position der führenden Lok referenziert, in dem der Abstand der jeweils geführten Lok zu führende Lok berücksichtigt wird. Somit sind alle Loks in der Lage, bei einer Funkunterbrechung in Abhängigkeit der Klasse gleichzeitig in gleicher Art zu reagieren. Optional können die Lokomotiven die Streckenklassen für den vorausliegenden Streckenabschnitt über ortsfeste Balisen einlesen. Die Balisen werden bei einem Wechsel in eine kritischere Klasse soweit vor dem entsprechenden Steckenabschnitt angeordnet, dass alle im Zugverband eingestellten Loks noch vor dem entsprechenden Steckenabschnitt die Balise passieren. Falls die Loks die Klassifizierung des vorausliegenden Streckenabschnitts über Balisen ermitteln, wird der aus der Zugkonfiguration bekannte Abstand zwischen Loks zu Ermittlung der Streckenposition verwendet, ab der alle Loks die Balise passiert haben und die neue Klassifizierung bekannt ist. Erst ab dieser Position wird die Klassifizierung wirksam.
Die Klassifizierung von Streckenabschnitten erfolgt in Abhängigkeit von den Gleisradien des jeweiligen Streckenabschnittes.

Vor der Fahrt wird die aktuelle Zugkonfiguration in den Steuerungseinrichtung auf den Lokomotiven hinterlegt. Die Zugkonfiguration enthält mindestens die folgenden Daten:
- Position der einzelnen Lokomotiven im Zugverband (Abstand zur führenden Lok)
- Gesamtmasse des Zugverbandes
Ergänzend können folgende Daten hinterlegt werden:
- Masseverteilung über den Zugverband
- Ausrüstungsstand der Wagen (2-achsige Wagen, Drehgestellwagen, etc.)

Die Geschwindigkeit wird der Steckenklasse nachgeordnet ausgewertet. Dabei werden die Daten der Zugkonfiguration berücksichtigt.
Es kann vorgesehen sein, das erfindungsgemäße Verfahren nur bei Zügen mit einer Mindestlänge anzuwenden, so dass z.B. bei Zügen bis zu 700m Länge unabhängig von der Geschwindigkeit keine autonome Reaktion erfolgt. Bei Zügen über 700m wird sowohl die Zuglänge als auch die Geschwindigkeit zur Ermittlung der zulässigen Zeit herangezogen, nach der eine autonome Reaktion erfolgen muss. Bei Geschwindigkeiten kleiner ca. 40km/h kann bei Zügen über 700m grundsätzlich sofort oder verzögert (in Abhängigkeit von den Klassen von Zugverbänden) autonom eine Bremsung eingeleitet werden.

### Vorteile der Erfindung

- die Steuerung der Kommunikation zwischen den am Zugverband beteiligten Lokomotiven wird so beeinflusst, dass die zulässigen Längsdruckkräfte im gesamten Zugverband zu jeder Zeit (also auch bei einem Funk-/Signalausfall) eingehalten werden
- der Zugverband wird in Abhängigkeit vom Gleisgeometrie und der Streckenführung sowie parallel zur momentanen Geschwindigkeit unter Berücksichtigung der Zugkonfiguration auch bei Funk-/Signalausfall optimal weiter beeinflusst
- eine nicht abgestimmte Reaktion verschiedener Lokomotiven des Zugverbandes bei Funk-/Signalausfall kann nicht mehr stattfinden
- die vor Fahrtbeginn durchzuführende Einteilung in Streckenabschnitte, Klassen und Gruppen von Zügen sowie davon abhängigen Zeitfenstern einer notwendigen Reaktion in Abhängigkeit von der momentanen Position führen zu einem abgestimmt steuerbaren und der jeweiligen Strecke angepassten Bremsregime aller Lokomotiven des Zugverbandes
die verzögerte Reaktion des Zugverbandes erhöht die Verfügbarkeit von Zügen mit verteilter Traktion, da der Zeitraum, innerhalb dem eine autonome Reaktion erfolgen muss, verlängert wird und in Folge dessen auch die Möglichkeit steigt, die Kommunikation nach einer Funkunterbrechung wieder zu etablieren.

### Ausführungsbeispiel

Die Erfindung soll nachstehend anhand eines Ausführungsbeispieles näher erläutert werden.

In einem Zugverband mit einer Gesamtlänge von 1000m sind an der Spitze und an der Position 500m Lokomotiven eingestellt. Der Zugverband besteht aus einheitlich beladenen, vierachsigen Drehgestellwagen ähnlicher Bauart. Über eine funkbasierte Mehrfachtraktionssteuerung wird der Zugverband von der führenden Lokomotive aus gesteuert. Solange die Funkverbindung zwischen den Lokomotiven besteht, arbeiten alle Lokomotiven nahezu synchron. Das betrifft nicht nur die Traktionsbefehle, sondern auch die Befehle zur Absenkung des Drucks in der Hauptluftleitung zum Einleiten von Bremsvorgängen. Da die Bremsbefehle über die bestehende Funkverbindung die geführte Lokomotive nahezu unverzögert erreichen, wird der Druck in der Hauptluftleitung nahezu synchron an zwei Stellen (Pos. 0m und Pos. 500m) abgesenkt, was zu einem gleichmäßigerem Ansprechen der Bremsen aller Fahrzeuge im Zugverband führt. Damit sinken die Längsdruckkräfte signifikant.

Im Falle einer Funkunterbrechung ist eine nahezu synchrone Steuerung der Loks nicht mehr möglich.
Im Falle einer Bremsanforderung von der führenden Lok aus würden ohne weitere Maßnahmen - bedingt durch die größere Zuglänge und der damit verbundenen längeren Laufzeit der Druckabsenkung und der wiederum daraus resultierenden größeren Unterschiede in der Abbremsung der Wagen - deutlich höhere Längsdruckkräfte als in konventionellen Zügen bis 700m Zuglänge entstehen.
Bei Funkunterbrechungen muss von dem ungünstigen Fall ausgegangen werden, dass unmittelbar nach dem Beginn der Unterbrechung der Funkverbindung von der führenden Lok ein Bremsbefehl erteilt wird.
Um auch in diesem Fall die ertragbaren Längsdruckkräfte nicht zu überschreiten, leiten die führende und die geführte Lok grundsätzlich autonom eine Bremsung ein. Da der Zeitpunkt des Beginns der Funkunterbrechung sowohl der führenden, als auch der geführten Lok bekannt ist, kann auch im Fall einer Funkunterbrechung nahezu synchron eine Bremsung eingeleitet werden.

Bedingt durch die konkrete Zugkonfiguration (homogenen Massenverteilung, Drehgestellwagen) kann der Zugverband in Streckenabschnitten mit großen Gleisradien jedoch wesentlich höhere Längsdruckkräfte ertragen ohne zu entgleisen.
Im Beispiel sind allen Lokomotiven über die Datenbank der Klassifizierung der Streckenabschnitte und über die per GPS ermittelte aktuelle Position die aktuelle Streckenklasse bekannt.
Unter der Annahme einer Funkunterbrechung und einer aktuelle Klasse "K" wird eine verzögerte Reaktion der Lokomotiven von z. B. 4 Sekunden zugelassen. Dauert die Funkunterbrechung weniger als 4 Sekunden; wird also die Funkverbindung innerhalb von 4 Sekunden wieder hergestellt, so erfolgt keine autonome Reaktion der Lokomotiven. Sollte die Funkunterbrechung länger als 4 Sekunden dauern, leiten alle Lokomotiven synchron eine Bremsung ein. In diesem Fall sind die Längsdruckkräfte mit denen vergleichbar, die auch bei einer bestehenden Funkverbindung auftreten.
Sollte unmittelbar nach der Unterbrechung der Funkverbindung von der führenden Lok aus eine Bremsung eingeleitet worden sein, laufen die noch gar nicht oder nur geringer bremsenden Wagen auf den vorderen Zugteil auf und erhöhen so die Längsdruckkräfte im Vergleich zu einer Bremsung bei bestehender Funkverbindung. Diese erhöhten Längsdruckkräfte können von dem konkreten Zugverband jedoch ohne erhöhtes Entgleisungsrisiko ertragen werden, da er sich einerseits in einem Streckenabschnitt mit großen Gleisradien befindet (hier die Streckenklasse "K") und andererseits die Wagenbauart und der Beladezustand sowie die Massenverteilung im Zugverband ein wesentlich niedrigeres Entgleisungsrisiko besitzen als Züge mit z. B. 2-achsigen Wagen und einer inhomogenen Masseverteilung.

## Patentansprüche

1. Verfahren zur Beeinflussung und Begrenzung längsdynamischer Kräfte in einem Zugverband mit verteilt im Zugverband angeordneten, zur Einleitung von Antriebs- und Bremskräften in den Zugverband eingerichteten Lokomotiven , wobei die Lokomotiven über eine Hauptluftleitung des Zugverbandes sowie über eine Kommunikationsverbindung miteinander verbunden sind,
**gekennzeichnet dadurch, dass**
eine vom Zugverband jeweilig zu befahrende Strecke vorab in Streckenabschnitte eingeteilt wird, wobei jedem Streckenabschnitt eine Klasse zugeordnet wird, welche das Verhalten des Zugverbandes in diesem Streckenabschnitt bei einer Unterbrechung der Kommunikationsverbindung vorgibt,
wobei in einer ersten Klasse innerhalb eines definierten Zeitfensters nach der Kommunikationsunterbrechung alle Lokomotiven im Zugverband eine Bremsung auslösen,
und wobei in mindestens einer zweiten Klasse, in der keine autonome Reaktion der Lokomotiven erforderlich ist, eine Überwachung der Hauptluftleitung zum Erkennen von Bremsanforderungen für das Abschalten der Traktionsleistung der mindestens einen geführten Lokomotive ausreichend ist, wobei diese Klassifizierung von Streckenabschnitten in einer Datenbank gespeichert und den Steuereinrichtungen aller im Zugverband befindlichen Lokomotiven zur Verfügung gestellt werden und auf jeder Steuereinrichtung die jeweilig aktuelle Zugkonfiguration bestehend mindestens aus der Position der einzelnen Lokomotive im Zugverband und der Gesamtmasse des Zugverbandes hinterlegt wird, wobei während der Fahrt des Zugverbandes die aktuelle Geschwindigkeit und die aktuelle Position von jeder Lokomotive ermittelt wird.

2. Verfahren nach Anspruch 1, **gekennzeichnet dadurch, dass** in der ersten Klasse von Streckenabschnitten innerhalb eines Zeitraums von 0 bis 3 Sekunden nach der Kommunikationsunterbrechung alle Lokomotiven im Zugverband eine Bremsung auslösen.

3. Verfahren nach Anspruch 1, **gekennzeichnet dadurch, dass** in der ersten Klasse von Streckenabschnitten innerhalb eines in Abhängigkeit von der Zugkonfiguration, der Zuggeschwindigkeit und den Bremsentwicklungszeiten festgelegten Zeitraums nach der Kommunikationsunterbrechung alle Lokomotiven im Zugverband eine Bremsung auslösen, wobei dieser Zeitraum für eine Bremsstellung "P" 3 bis 5 Sekunden und für eine Bremsstellung "G" 18 bis 30 Sekunden beträgt.

4. Verfahren nach einem der Ansprüche 1 bis 3, **gekennzeichnet dadurch, dass** die jeweilige Geschwindigkeit des Zugverbandes über Radsatzgeber und/oder Radareinrichtungen ermittelt wird.

5. Verfahren nach einem der Ansprüche 1 bis 4, **gekennzeichnet dadurch, dass** die aktuelle Position des Zugverbandes aus der Kombination eines GPS-Empfängers und - zur Überbrückung von Empfangslücken - einem Wegmesser ermittelt wird.

6. Verfahren nach einem der Ansprüche 1 bis 5, **gekennzeichnet dadurch, dass** die Ortsinformation auf jeder Lokomotive in der Datenbank mit der jeweiligen Klassifizierung des entsprechenden Streckenabschnittes abgeglichen und die aktuelle Klasse ermittelt wird.

7. Verfahren nach einem der Ansprüche 1 bis 6, **gekennzeichnet dadurch, dass** die Ortsinformation auf die jeweilige Position einer den Zugverband führenden Lokomotive referenziert wird, indem der Abstand der geführten Lokomotive zur führenden Lokomotive berücksichtigt wird.

8. Verfahren nach einem der Ansprüche 1 bis 7, **gekennzeichnet dadurch, dass** die die Klassifizierung des jeweils vorausliegenden Streckenabschnittes über Balisen an die Lokomotiven übertragen wird.

9. Verfahren nach Anspruch 8, **gekennzeichnet dadurch, dass** der aus der Zugkonfiguration bekannte Abstand zwischen den am Zugverband beteiligten Lokomotiven zur Ermittlung der Streckenposition ab dem Zeitpunkt verwendet wird, ab der alle Lokomotiven die Balise passiert haben und die neue Klassifizierung bekannt ist.

10. Verfahren nach einem der Ansprüche 1 bis 9, **gekennzeichn t dadurch, dass** die Geschwindigkeit des Zugverbandes der Streckenklasse nachgeordnet ausgewertet wird.

11. Verfahren nach einem der Ansprüche 1 bis 10, **gekennzeichnet dadurch, dass** in Ergänzung zur in den Steuereinrichtungen der Lokomotiven als Mindeststandard zu hinterlegenden Informationen (Position der einzelnen Lokomotiven im Zugverband, Gesamtmasse des Zugverbandes) Informationen zur Masseverteilung über den gesamten Zugverband und zum Ausrüstungsstand der einzelnen Wagen (insbesondere 2-achsige und/oder vierachsige Waggons, Drehgestellwagen etc.) hinterlegt werden.

## Claims

1. Method for influencing and limiting longitudinal dynamic forces in a train set having locomotives that are distributed in the train set and configured to transfer drive and braking forces to the train set, wherein the locomotives are connected to one another via a main air duct of the train set and via a communication connection,
**characterised in that**
the track to be travelled by the train set is divided beforehand into track sections, wherein a class is assigned to each track section which specifies the behaviour of the train set in this track section in the event of an interruption of the communication connection,
wherein, in a first class, all locomotives in the train set trigger a braking operation within a defined time window after an interruption in communications,
and wherein, in at least one second class in which an autonomous reaction of the locomotives is not required, it is sufficient to monitor the main air duct in order to identify braking requirements for switching off the traction of the at least one guided locomotive,
wherein this classification of track sections is stored in a database and provided to the control devices of all locomotives located in the train set, and the current train configuration consisting of at least the position of the individual locomotive in the train set and the total mass of the train set is recorded on each control device, wherein the current speed and the current position of each locomotive is determined while the train set is travelling.

2. Method according to claim 1, **characterised in that,** in the first class of track sections, all locomotives in the train set trigger a braking operation within a time period of 0 to 3 seconds after the interruption in communications.

3. Method according to claim 1, **characterised in that,** in the first class of track sections, all locomotives in the train set trigger a braking operation within a time period defined depending on the train configuration, the train speed and the braking times after the interruption in communications, this time period being 3 to 5 seconds for a brake position "P" and 18 to 30 seconds for a brake position "G".

4. Method according to any of claims 1 to 3, **characterised in that** the respective speed of the train set is determined by wheel set transmitters and/or radar devices.

5. Method according to any of claims 1 to 4, **characterised in that** the current position of the train set is determined from the combination of a GPS receiver and - to bridge reception gaps - an odometer.

6. Method according to any of claims 1 to 5, **characterised in that** the location information on each locomotive in the database is compared with the respective classification of the corresponding track section and the current class is determined.

7. Method according to any of claims 1 to 6, **characterised in that** the location information is referenced relative to the respective position of a locomotive that guides the train set by taking into account the distance from the guided locomotive to the guiding locomotive.

8. Method according to any of claims 1 to 7, **characterised in that** the classification of the respective track section ahead is transmitted to the locomotives via balises.

9. Method according to claim 8, **characterised in that** the distance between the locomotives involved in the train set, said distance being known from the train configuration, is used to determine the track position as of the time by which all locomotives have passed the balise and the new classification is known.

10. Method according to any of claims 1 to 9, **characterised in that** the speed of the train set is evaluated in a manner subordinate to the track class.

11. Method according to any of claims 1 to 10, **characterised in that,** in addition to the information to be recorded in the control devices of the locomotives as a minimum standard (position of the individual locomotives in the train set, total mass of the train set), information on the mass distribution over the whole train set and the equipment status of the individual cars (in particular 2-axle and/or four-axle cars, bogie cars, etc.) is recorded.

## Revendications

1. Procédé destiné à influencer et à limiter des forces dynamiques longitudinales dans une chaîne de wagons avec des locomotives réparties dans la chaîne de wagons et configurées pour l'introduction de forces d'entraînement et de freinage dans la chaîne de wagons, dans lequel les locomotives sont reliées entre elles par un conduit d'air principal de la chaîne de wagons et par une connexion de communication,
**caractérisé en ce que**
une voie sur laquelle la chaîne de wagon doit passer est divisée préalablement en tronçons de voie, dans lequel une classe est attribuée à chaque tronçon de voie, classe qui détermine le comportement de la chaîne de wagons sur ledit tronçon de voie en cas de rupture de la connexion de communication,
dans lequel, dans une première classe, dans une fenêtre de temps définie après l'interruption de la communication, toutes les locomotives dans la chaîne de wagons déclenchent un freinage,
et dans lequel, dans au moins une deuxième classe, dans laquelle une réaction autonome des locomotives n'est pas nécessaire, une surveillance du conduit d'air principal aux fins de reconnaissance des ordres de freinage est suffisante pour désactiver la traction de l'au moins une locomotive tractée,
dans lequel la classification des tronçons de voie est mémorisée dans une base de données et mise à disposition des dispositifs de commande de toutes les locomotives qui se trouvent dans la chaîne de wagons, et chaque dispositif de commande dispose de la configuration réelle du train, composée au moins de la position de chaque locomotive dans la chaîne de wagons et de la masse totale de la chaîne de wagons, la vitesse réelle et la position réelle de chaque locomotive étant déterminées durant le trajet de la chaîne de wagons.

2. Procédé selon la revendication 1, **caractérisé en ce que,** dans la première classe de tronçons de voie, toutes les locomotives dans la chaîne de wagons déclenchent un freinage dans un laps de temps de 0 à 3 secondes après l'interruption de la communication.

3. Procédé selon la revendication 1, **caractérisé en ce que,** dans la première classe de tronçons de voie, dans un laps de temps déterminé après l'interruption de la communication, qui dépend de la configuration du train, de la vitesse du train et des durées de freinage, toutes les locomotives dans la chaîne de wagons déclenchent un freinage, ce laps de temps étant de 3 à 5 secondes pour une position de freinage "P" et de 18 à 30 secondes pour une position de freinage "G".

4. Procédé selon l'une quelconque des revendications 1 à 3, **caractérisé en ce que** la vitesse respective de la chaîne de wagons est déterminée par des compteurs d'essieux et/ou des dispositifs radar.

5. Procédé selon l'une quelconque des revendications 1 à 4, **caractérisé en ce que** la position réelle de la chaîne de wagons est déterminée par la combinaison d'un récepteur GPS et, pour combler les trous de réception, d'un capteur de déplacement.

6. Procédé selon l'une quelconque des revendications 1 à 5, **caractérisé en ce que** les informations locales sur chaque locomotive dans la base de données sont comparées avec la classification respective du tronçon de voie concerné, et la classe réelle est déterminée.

7. Procédé selon l'une quelconque des revendications 1 à 6, **caractérisé en ce que** les informations locales sur la position réelle d'une locomotive tractant la chaîne de wagons sont référencées, **en ce que** la distance entre la locomotive tractrice et la locomotive tractée est prise en compte.

8. Procédé selon l'une quelconque des revendications 1 à 7, **caractérisé en ce que** la classification de chaque tronçon de voie en approche est transmise par des balises aux locomotives.

9. Procédé selon la revendication 8, **caractérisé en ce que** la distance entre les locomotives qui font partie de la chaîne de wagons, connue à partir de la configuration du train, est utilisée pour déterminer la position sur la voie à partir du moment où toutes les locomotives ont passé la balise et où la nouvelle classification est connue.

10. Procédé selon l'une quelconque des revendications 1 à 9, **caractérisé en ce que** la vitesse de la chaîne de wagons est déterminée *a posteriori,* en fonction de la classe de voie.

11. Procédé selon l'une quelconque des revendications 1 à 10, **caractérisé en ce que,** en complément des informations minimales à fournir au dispositif de commande des locomotives (position de chaque locomotive dans la chaîne de wagons, masse totale de la chaîne de wagons), des informations sur la répartition de la masse sur toute la chaîne de wagons et sur le degré d'équipement de chaque wagon (en particulier les wagons à 2 essieux et/ou à 4 essieux, les wagons à bogies, etc.) sont fournies.
